# EUROPEAN PATENT SPECIFICATION

(11) **EP 3 529 685 B1**
(45) Date of publication and mention of the grant of the patent: **27.11.2024**
(21) Application number: 17901325.5
(22) Date of filing: 03.10.2017
(51) Int. Cl.: G06F 3/01, G06F 3/04815, A63F 13/212, A63C 17/04, A63C 17/24, A63F 13/211, A63F 13/24, A63F 13/25, A63F 13/5255, A63F 13/245, A63B 21/00, A63B 22/20, A63B 69/00, A63B 24/00, A63B 71/06

(54) **VIRTUAL-REALITY MOTION PLATFORM**
BEWEGUNGSPLATTFORM FÜR VIRTUELLE REALITÄT
PLATE-FORME DE MOUVEMENT DE RÉALITÉ VIRTUELLE

(30) Priority: 18.10.2016 TR 201614631
(43) Date of publication of application: 28.08.2019
(73) Proprietor: Tugra, Sahiner, 34840 Maltepe/Istanbul (TR)
(72) Inventor: Tugra, Sahiner, 34840 Maltepe/Istanbul (TR)
(74) Representative: Yalçiner Patent and Consulting Ltd.
(86) International application number: PCT/TR2017/050471
(87) International publication number: WO 2018/182552

(56) References cited:
- DE-A1- 102013 110 947
- US-A1- 2013 237 378
- US-A1- 2014 111 424

## Description

### Technical Field of the Invention

The present invention is related to; a virtual reality motion platform which is developed to provide body movements and directions such as walking, running, jumping, bending, etc. to be transferred to software based simulative environments which are also known as virtual reality environments.

### Prior Art

Software based simulative environments which are also known as virtual reality environments and increasingly being a part of the modern world are used in a great range of areas covering computer games, education applications etc.

While it is a significant challenge to create a virtual reality environment in terms of hardware and the software, another critic technical handicap which needs to be eliminated in order to use virtual reality environments effectively is to enable an interaction between a user and a virtual reality environment.

No matter what type of a hardware such as desktop based, console based or a specific hardware developed for a particular aim is used, the interaction between the user and the virtual reality environments is provided by means of the auxiliary equipment including a keyboard, a mouse, a game controller, etc. This leads to a user to perform his/her interaction with the environment with the help of the movements which are allowed by the hardware which he/she uses instead of their natural movements. Limited movements restrict the movement freedom of the users as the most basic principle of the virtual reality environment and cause their experiences to be halted.

Some applications which are separately known in the prior art of the invention from hardware-dependent interaction methods and which can transfer the user movements to a virtual reality environment by tracking are also provided. In said systems, movements of the user are transferred to a virtual reality environment by tracking them via optical sensors (a camera, IR, thermal screening, etc.). At this point, the most important technical problem is that the system would fail to continue tracking and even stop performing upon giving an error if a user gets out of the tracking range of a sensor.

Therefore, a great number of equipment have been developed in the prior art to provide transferring the user movements to virtual reality environments while preserving the most natural states of users. The most prominent examples among the equipment which have been able to find the most common usage area are the motion platforms which enable the user to interact with a virtual reality environment without restricting their movement freedom in a restricted range.

There are many motion platforms which consist of one or more components, which can transfer some specific movements or all body movements of the user to a virtual reality environment. The inventions which are disclosed in some Patent documents such as KR101297753B1, KR100919616B1, US2004048722A1, KR101439175B1, EP2417508A2, DE102008032231A1, WO2007062238A2, WO2005084761A1, US5963891A, US2003220763A1, US6135928A, US6052114A, WO2004099967A1, WO2004099966A1, WO2004072836A1, WO9742590A1, GB2291167A, DE19838801A1,DE19713805A1, US2013237378A, US2014111424A1, DE102013110947A1 can be referred to as examples of the motion platforms which are known in prior art.

US2013237378A discloses a system for simulating motion in a virtual environment. This system comprising a constraining element and footwear that allow the user freedom of movement while limiting one to a circumscribed area.

US20140111424A1 discloses a system for use with a virtual environment technology includes a platform configured to support a user, a harness support assembly coupled to the platform and extending upwardly from the platform, and a safety harness configured to be worn by the user.

DE102013110947A1 discloses a method for generating and outputting an optical simulation representation taking into account personal movements in a localized real space.

### Summary and Aims of the Invention

A virtual reality motion platform according to claim 1 and an operation method thereof according to claim 7 are provided.

Advantageous embodiments are provided according to the dependent claims.

### Description of the Illustrative Figures of the Invention

The figures of a virtual reality motion platform according to the present invention are disclosed as follows.

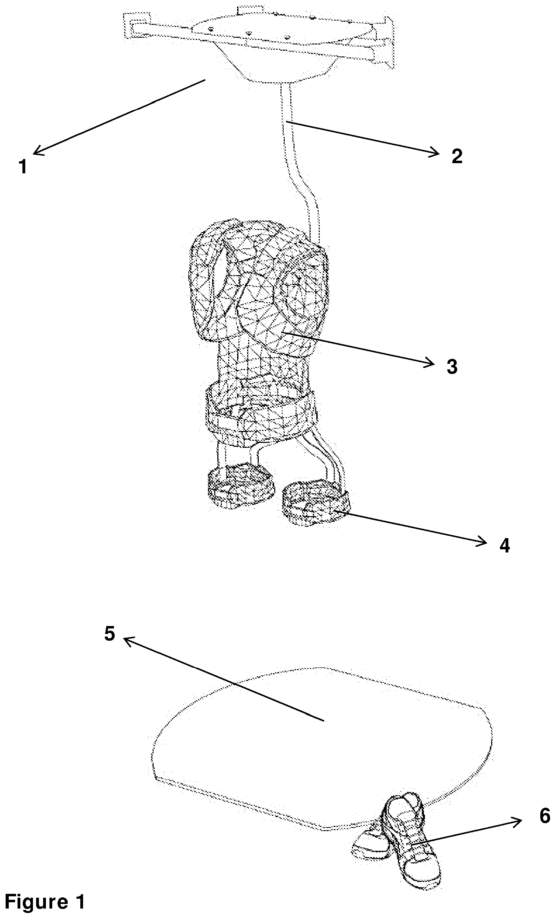

**Figure 1** **-is** an overall view of a virtual reality motion platform.

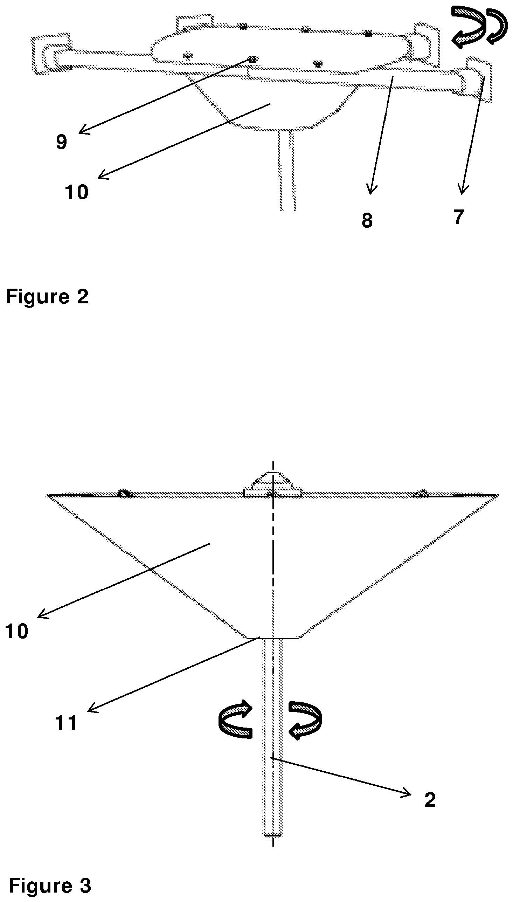

Figure 2 -is an overall view of a mounting element of the virtual reality motion platform.
Figure 3 -is a side view of the connecting element of the virtual reality motion platform.

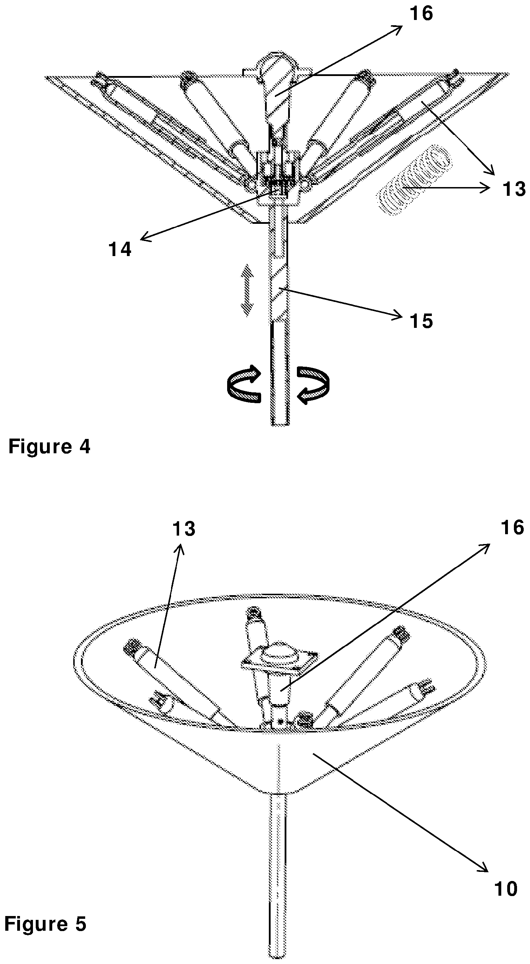

Figure 4 -is a sectional view of the connecting element of the virtual reality motion platform.
Figure 5 -is an inside view of the connecting element of the virtual reality motion platform.

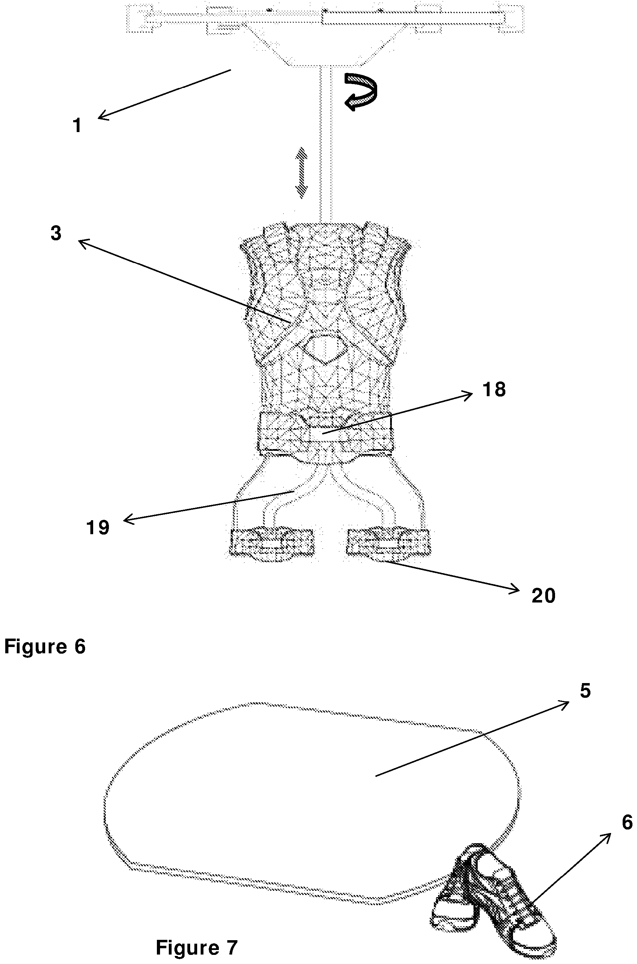

Figure 6 -is a front view of the connecting element of the virtual reality motion platform.
Figure 7 -is an overall view of a bottom and a shoe of the virtual reality motion platform.

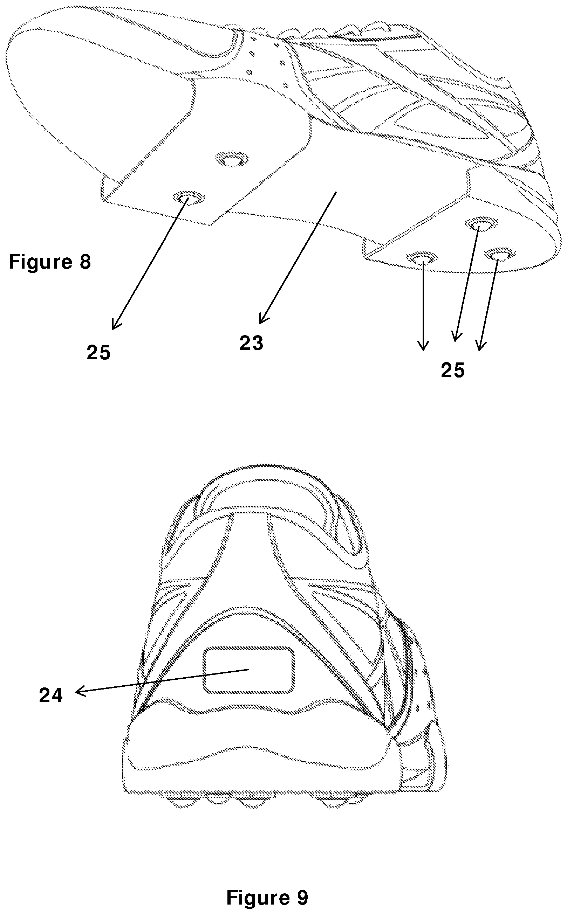

Figure 8 -is a bottom perspective of the shoe of the virtual reality motion platform.
Figure 9 -is rear view of the shoe of the virtual reality motion platform.

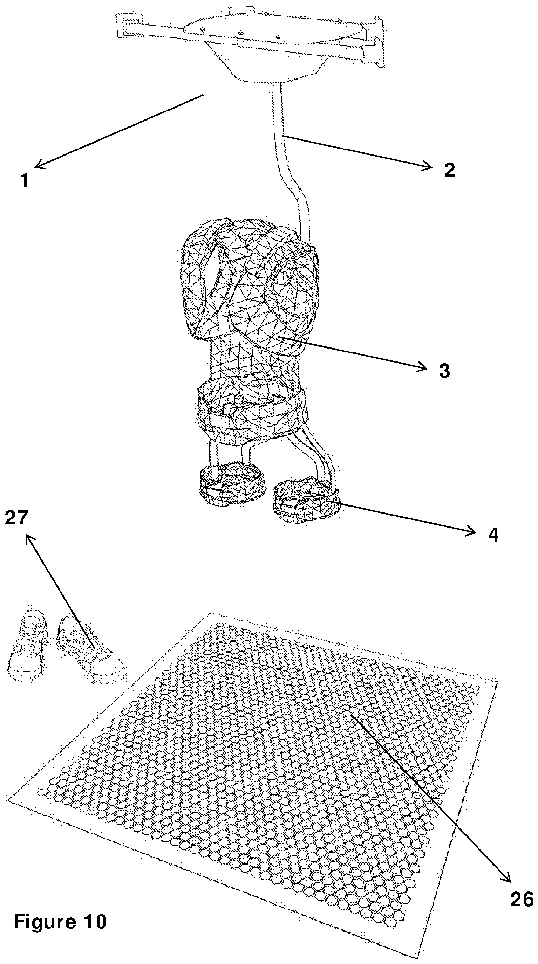

Figure 10 -is an overall view of another embodiment of the virtual reality motion platform.

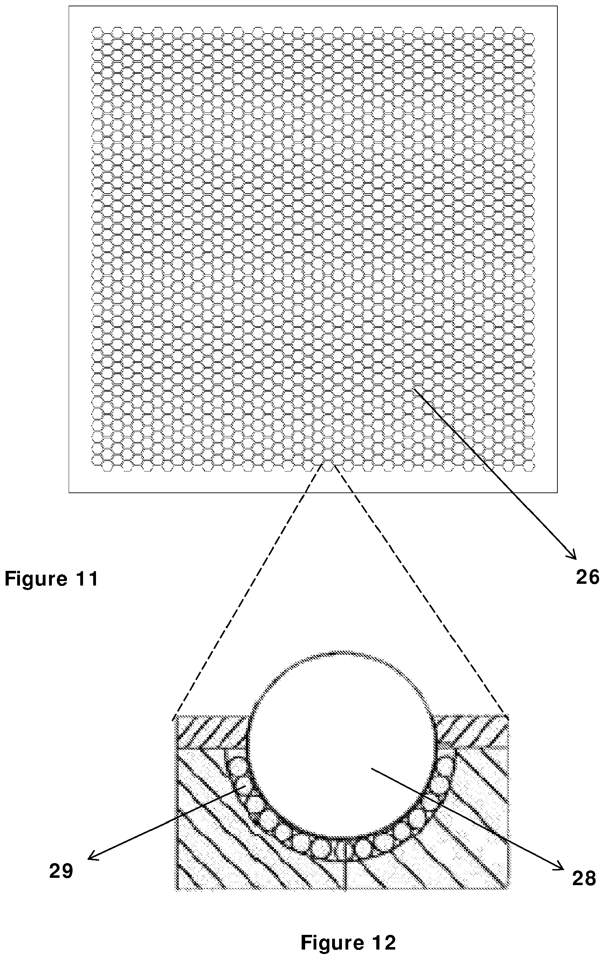

Figure 11 -is a top view of another embodiment of the bottom of the virtual reality motion platform.
Figure 12 -is a detail view of a ball mechanism placed on the bottom of the virtual reality motion platform.

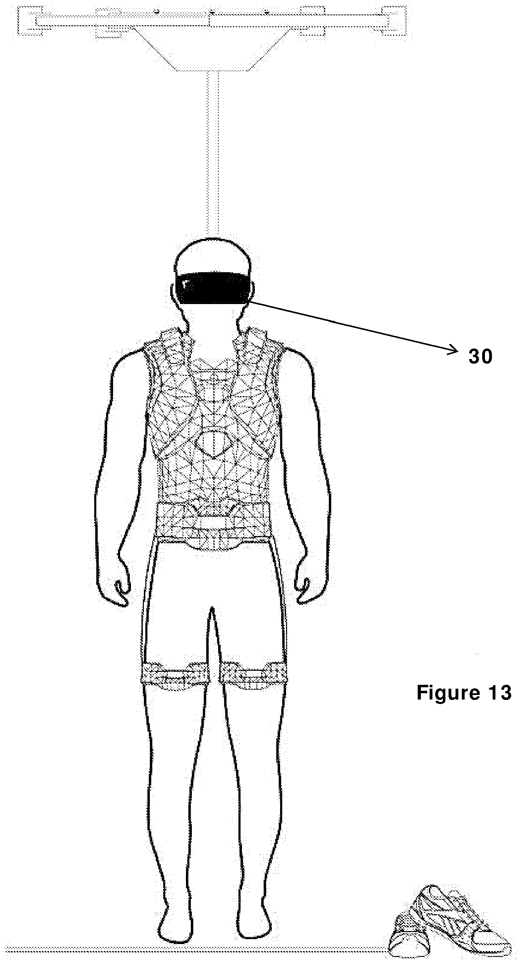

**Figure 13****-** is a front view of the virtual reality motion platform with a user and virtual reality glasses.

### Description of the Elements/Portions/Parts of the Invention

The parts/portions/elements which are illustrated in the appended figures disclosed in order to describe a virtual reality motion platform according to the invention are individually numbered and the description of each number is provided below.
**1.** Connection apparatus
**2.** Balancing rod
**3.** Gaming vest / Harness element
**4.** Leg belt set
**5.** High friction coefficient smooth plane floor
**6.** Shoes with balls
**7.** Wall mounting apparatus
**8.** Load drawbar
**9.** Ceiling mounting apparatus
**10.** Outer body
**11.** Movement limiting steel ring
**13.** Damper system
**14.** Rotary head
**15.** Interconnection element
**16.** Analogue potentiometer and motion system
**18.** Gaming vest electronic circuit and sensor slot
**19.** Leg belt
**20.** Leg belt electronic circuit and sensor slot
**23.** Foot sole
**24.** Electronic circuit and sensor slot for the shoes
**25.** Balls for shoes
**26.** Ball covered floor
**27.** Shoes without balls
**28.** Floor balls
**29.** Micro bearing ball
**30.** Virtual reality glasses

### Detailed Description of the Invention

The virtual reality motion platform according to the present invention which is developed to provide body movements and directions such as walking, running, jumping, bending, etc. to be transferred to the software based simulative environments which are also known as virtual reality essentially consists of 3 main parts.

### A. Mounting apparatus (1):

The mounting apparatus (1) is an apparatus which enables a gaming vest / harness (3) to be worn by a user to be mounted on a stable structure such as a wall or a ceiling and also has the electronic and mechanical equipment which can sense, restrict and apply a certain force against the user's movements.

The mounting apparatus (1) may consist of;
- A covered outer body (10) including a balancing rod (2), a movement limiting steel ring (11), a damper system (13) being connected to eight different points, a rotary head (14), an interconnection element (15) and an analogue potentiometer and motion system (16),
- a plurality of ceiling mounting apparatus (9) providing the outer body (10) to be mounted on a stable structure such as a wall or a ceiling, a plurality of load drawbars (8) and a plurality of wall mounting apparatus (7).

The damper system (13) can be a hydraulic damper system as well as a spring damper system according to different embodiments of the invention.

The damper system (13) is connected to eight different points and provides force against the user's movements in a suitable manner depending on the conditions of a virtual reality environment. However, the magnitude of an applied counterforce can also be adjusted.

The rotary head (14) is a part of which the upper portion is stable and the lower portion is movable and enables the users to turn around their own axis together with the gaming vest (3) worn by the user.

The interconnection element (15) is embedded in the balancing rod (2) and is a part which enables the user to perform various movements such as jumping and bending.

The analogue potentiometer and motion system (16) is a movable analogue sensor system which enables four-direction movements of the balancing rod (2) to which it is coupled to and said movements to be sensed.

The balancing rod (2) is connected to the gaming vest (3) which is worn by the user and allows the users to be able to turn around their own axis at 360° by balancing them and enabling them to move up and down. Furthermore, the balancing rod (2) can delimit the user movements at a certain range by means of the movement limiting steel ring (11) placed between the outer body (10) and the connection point.

The wall mounting apparatus (7) is a movable part which allows movement up to 360 degrees and also a friction part which can correspond to a wall to which it would be mounted and allows pressing between two walls.

The load drawbar (8) is in a retractable configuration.

The ceiling mounting apparatus (9) is a part which enables the mounting apparatus (1) to be mounted on a ceiling without any need of the wall mounting apparatus (7) and the load drawbar (8).

### B. Gaming Vest (3):

The gaming vest (3) or harness is a part which a user can wear and also include a leg belt set (4); may consist of;
- A gaming vest electronic circuit and sensor slot (18) containing the sensors and circuit elements which provide all of the body directions of the user to be detected,
- Two leg belts (19) which allow the user to sit with the balancing rod (2), which secures the user's upper legs and can take a form such that it can carry the user's weight when the user sits down and
- Two leg belt electronic circuits and sensor slots (20) including the sensors and circuit elements which enable the body directions of the user to be detected.
Gaming vest (3) can enable the user to keep his/her balance without restricting the movement abilities of said users and can also prevent them to change their locations in a real environment. While users freely move on the floors (5 or 26), the users can also move in place as if walking, running etc they would not have to actually run in the real world with the help of this gaming vest (3).

### C. Motion floors and shoes:

Once the users connect themselves to the platform by wearing the gaming vest (3), they should get on a floor on which they can move in a virtual environment but in a real environment they are only allowed to perform dynamic movements on where they are.

This requirement is achieved by two different floors and two different shoes according to an embodiment of the present invention.

A floor used in an embodiment of the present invention is a high friction coefficient smooth and plain floor (5), said floor can be used with an adjustable foot sole (not shown) in a fixable configuration to a shoe with balls (6) or a normal foot sole. Because said foot sole has the very same technical characteristics with the shoe with balls (6), the shoe with balls (6) will be preferred in the description.

Shoe with balls (6) has a plurality of balls (25) on its bottom (23) to enable the user to perform walking and jumping movements in all directions on a high friction coefficient smooth and plain floor (5). Moreover, said shoe with balls may also have a shoe electronic circuit and sensor slot (24) including the sensors and the electronic circuit elements which provide detecting the foot movements in the shoe (6) and measuring the load on the shoe. The aforementioned foot sole has the very same technical features with the shoe with balls (6) and it also has an adjustable configuration which can be subsequently attached to user's shoe.

A floor which is used in another embodiment of the invention is a ball covered floor (26) and has a plurality of floor balls (28) which are located on the bearing balls on the floor and a plurality of micro bearing balls (29). A user can move in any desired direction while wearing any type of shoes by means of the balls (28) on the floor (26) and the micro bearing balls.

The platform according to the present invention which is contemplated to be used in virtual reality technologies is a motion device which can be also called as a motion platform. After the users wear the ball shoe (6) which is specifically designed or a scalable foot sole with which they can also use their shoes, they get on the floor (5) of the platform and wear the gaming vest (3). The platform would be opened once the users complete the dressing process.

The gaming vest (3) can keep the user at a balance while connecting them on a wall or a ceiling by means of the balancing rod (2) and the mounting apparatus (1). When the user start to walk or run on the platform, the gaming vest (3) would secure the user and will also prevent them from changing their locations in the real world.

The range of motion of the user in the real world is confined to an approximately 1 m² area as allowed by the motion limiting steel ring (11).In this range, because the user is provided with a high friction between the floor (5) and the shoe (6), they would move in a similar way as that in natural walking sense.

The platform according to the present invention is connected to the virtual reality system in which it is used (A computer, The virtual reality glasses, The game consoles or Smart phones) via wireless technology and it collects the user movements by means of the sensors which are included therein. The sensors are an IMU (Inertial Measurement Unit) sensor, a Bend (BEND) sensor, a Touch (Touch) sensor, a Pressure (Pressure) sensor, an Optical sensor and a Strain gauge (Strain Gauge) and also a potentiometer can be used. The measurements which are received from a plurality of points in the entire system are cleaned by means of noise suppression filters such as Kalman Filter, DeadReckoning and the directions and rates of the body can be detected in the fastest way by using various algorithms in the background. The detected directions and rates are transferred to the receiving platform in a wireless manner and converted into movement within the virtual reality application. All of the process is completed in less than 10 ms.

The damper system (13) which is placed in the mounting apparatus (1) can increase and decrease the tensile depending on the harmony between the used virtual reality application and the platform, thereby the simulation of the user's movements in different conditions such as air, water or rough weather can be performed.

The electronic sensors and circuit components are located in the platform and on the outer body (10), the gaming vest (3), the shoe (6) and the leg belts (19) and are in communication with each other and also they are connected to the virtual reality system in a wired or wireless way.

As long as the motion process of the user is continued, their movements such as walking ahead or back, running, jumping, bending and turning around their own axis at 360 degrees are measured continuously and at very high frequencies and transferred to the system in a wireless manner.

In the operating method of the virtual reality system according to the present invention;
- Movement changes at different moments are detected by the IMU, the optical, the touch and the pressure sensors on the shoes (6 and 27), the positions are cleaned by means of various filters and compared with the movements sensed by the other IMU sensors in different points on the feet and the instant changes are transferred to the platform as being movements.
- All read sensor values are compared with each other by means of particular algorithm methods and the transition from a moment to another are read at high frequencies, the direction and the manner of the motion is detected and the motion is transferred to the motion platform to which the motion is connected.
- The direction to which the body, the legs and the feet are faced are separately transferred to the related application by means of the IMU sensors on the gaming vest (3) and the shoes (6) depending on the capacities of the platform and the software to which the components are connected.
- The sensitivity of the damper and the spring system (13) can be adjusted and the movements of the user in different environments can be simulated in relation with the competence of the system and the software to which said component is connected.
- The user's movements such as bending and jumping are sensed by the sensors and also transferred as bending and jumping to the platform and the virtual reality application to which they are connected.
- The user's movements such as turning around their own axis are transferred to the platform and the application to which they are connected by detecting by means of the IMU sensors at very high frequencies (200 times at second) and accuracies (at a level of sensing a 0.35 degree in 360 degrees).

## Claims

1. A virtual reality motion platform configured to provide body movements and directions of a user, the body movements comprising walking, running, jumping, bending to be transferred to a software based simulative virtual reality environment, wherein the virtual reality motion platform comprises:
a mounting apparatus (1) comprising,
• An outer body (10) including a balancing rod (2), a rotary head (14),
a gaming vest (3) / harness connected to the balancing rod (2),
a shoe (6) has a plurality of balls (25) on its bottom (23) ,
a floor (5, 26),
**characterized in that**
the mounting apparatus (1) further comprises :
• A plurality of ceiling mounting apparatuses (9) which enable the outer body (10) to be mounted on a ceiling or a wall, and a plurality of wall mounting apparatuses (7),
• a motion limiting steel ring (11) placed between the outer body (10) and the connection point, a damper system connected to eight different points (13) and an analog potentiometer and a motion system (16) coupled to the balancing rod (2)
• the gaming vest (3) / harness further comprising: an electronic circuit and/or sensor slot (18) including sensors and circuit components which enable the body directions of the user to be detected,
• two leg belts (19) being configured to secure the user's upper legs and having a form such that it can carry the user's weight when they sit down on the floor (5),
the shoe (6) further comprising:
• an electronic circuit and sensor slot (24) including sensors and electronic circuit components that provides detecting the feet movements and measuring a load on the user's feet,
• an IMU sensor or an optical sensor and
• a touch sensor and a pressure sensor.

2. The virtual reality motion platform according to claim 1, **characterized in that** the damper system (13) is a spring damper system.

3. The virtual reality motion platform according to claim 1, **characterized in that** the damper system (13) is a hydraulic damper system.

4. The virtual reality motion platform according to claim 1, **characterized in that** the damper system (13) is configured such that its tensile strength can be increased and decreased to allow applying power against the user's movements.

5. The virtual reality motion platform according to claim 1, **characterized in that** an upper portion of the rotary head (14) is stable and lower portion of the rotary head is movable.

6. Operation method of virtual reality motion platform according to claim 1, **characterized in that** the method comprises steps of
a. detecting the movement changes at different moments by the IMU sensor or optical sensors on the shoes (6 and 27) ,
b. cleaning measured points by means of noise suppression filters and comparing the movement changes with the sensed movements by other sensors at different points on the feet, and transferring the instant changes as movements to the virtual reality environment.

7. Operation method according to claim 6, **characterized in that** the method comprises further steps of predicting the position of a foot depending on load changes at different moments which are sensed by the touch and the pressure sensors on the shoes (6 and 27), cleaning the position by means of the noise suppression filters; comparing said position with the other touch and pressure sensors on the other foot and transferring the instant changes as movements to the virtual reality environment.

8. Operation method according to claim 7, ***characterized in that** the method comprises further steps of transferring separately the directions to which user's body, legs and feet are faced by means of IMU sensors on the gaming vest (3) and the shoes (6) depending on the capacities of the platform and the software to which the components are connected.

## Patentansprüche

1. Ein Virtual-Reality-Bewegungsplattform, die so konfiguriert ist, dass sie Körperbewegungen und Richtungen von Eines Benutzers, wobei die Körperbewegungen das Gehen, Laufen, Springen, Beugen,übertragen in eine softwarebasierte simulative Virtual Reality-Umgebung wird, wobei die Virtual-Reality-Bewegungsplattform Folgendes umfasst: eine Montagevorrichtung (1), das Folgende umfasst,
• einen Außenkörper (10) mit einer Stabilisationsstange (2), einem Drehkopf (14), eine Spielweste (3) / ein Gurtzeug, das mit dem Stabilisationsstange (2) verbunden ist, ein Schuh (6) an seiner Unterseite (23) mehrere Kugeln (25) aufweist,einen Boden (5, 26),
**dadurch gekennzeichnet, dass**
die Montagevorrichtung (1) ferner umfassend:
• Eine Vielzahl von Deckenbefestigungsvorrichtungen (9), die es ermöglichen, den Außenkörper (10) an einer Decke oder einer Wand zu befestigen, und eine Vielzahl von Wandbefestigungsvorrichtungen (7),
• einen bewegungsbegrenzenden Stahlring (11), der zwischen dem Außenkörper (10) und dem Verbindungspunkt angeordnet ist, ein Dämpfersystem, das mit acht verschiedenen Punkten (13) verbunden ist, und ein analoges Potentiometer und ein Bewegungssystem (16), das mit die Stabilisationsstange (2) gekoppelt ist.
• die Spielweste (3) / das Gurtzeug ferner umfassend: einen elektronischen Schaltkreis und/oder Sensorschlitz (18) mit Sensoren und Schaltungskomponenten, die es ermöglichen, die Körperrichtungen des Benutzers zu erfassen,
• zwei Beingurte (19), die so gestaltet sind, dass sie die Oberschenkel des Benutzers sichern, und die eine Form, die das Gewicht des Benutzers tragen kann, wenn dieser sich auf den Boden (5) setzt, der Schuh (6) ferner umfassend:
• eine elektronische Schaltung und einen Sensorschlitz (24) mit Sensoren und elektronischer Schaltung Komponenten, die Fußbewegungen erfassen und die Belastung messen die Füße des Benutzers,
• einen IMU-Sensor oder einen optischen Sensor und
• einen Berührungssensor und einen Drucksensor.

2. Die Virtual-Reality-Bewegungsplattform nach Anspruch 1, **dadurch gekennzeichnet, dass** das Dämpfersystem (13) ist ein Feder-Dämpfer-System.

3. Die Virtual-Reality-Bewegungsplattform nach Anspruch 1, **dadurch gekennzeichnet, dass** das Dämpfersystem (13) ist ein hydraulisches Dämpfersystem.

4. Die Virtual-Reality-Bewegungsplattform nach Anspruch 1, **dadurch gekennzeichnet, dass** das Dämpfersystem (13) ist so konfiguriert, dass seine Zugfestigkeit erhöht und verringert werden kann, um eine Kraftanwendung gegen die Bewegungen des Benutzers zu ermöglichen.

5. Der Virtual-Reality-Bewegungsplattform nach Anspruch 1, **dadurch gekennzeichnet, dass** ein oberer Teil des Drehkopfes (14) ist stabil und der untere Teil des Drehkopfes ist beweglich.

6. Verfahren zum Betrieb der Virtual-Reality-Bewegungsplattform nach Anspruch 1, **dadurch gekennzeichnet, dass** das Verfahren die folgenden Schritte umfasst
a. Erkennung der Bewegungsveränderungen zu verschiedenen Zeitpunkten durch den IMU-Sensor oder
optische Sensoren an den Schuhen (6 und 27),
b. Messpunkte mit Hilfe von Rauschunterdrückungsfiltern zu reinigen und der Bewegungsveränderungen mit den von anderen Sensoren an verschiedenen Stellen der Füße erfassten Bewegungen zu vergleichen und die momentanen Veränderungen als Bewegungen auf die Virtual Reality-Umgebung zu übertragen.

7. Operationsverfahren nach Anspruch 6, **dadurch gekennzeichnet, dass** das Verfahren ferner umfasst Schritte der Vorhersage der Position eines Fußes in Abhängigkeit von Belastungsänderungen zu verschiedenen Zeitpunkten, die von den Berührungs- und Drucksensoren an den Schuhen (6 und 27) erfasst werden, Reinigen der Position mit Hilfe der Rauschunterdrückungsfilter; Vergleich der Position mit den anderen Berührungs- und Drucksensoren am anderen Fuß und Übertragung der momentanen Veränderungen als Bewegungen auf die Virtual Reality-Umgebung.

8. Operationsverfahren nach Anspruch 7, **dadurch gekennzeichnet, dass** das Verfahren ferner umfasst Schritte zur getrennten Übertragung der Richtungen, denen Körper, die Beine und die Füße des Benutzers mittels IMU-Sensoren auf der Spielweste (3) und den Schuhen (6) ausgesetzt sind, je nach den Kapazitäten der Plattform und der Software, die mit den Komponenten verbunden sind.

## Revendications

1. Plate-forme de mouvement de réalité virtuelle configurée pour fournir des mouvements corporels et des directions à un utilisateur, les mouvements corporels comprenant la marche, la course, le saut, la flexion à transférer à un environnement de réalité virtuelle simulative basé sur un logiciel, dans lequel la plate-forme de mouvement de réalité virtuelle comprend :
un appareil de montage (1) comprenant,
• Un corps extérieur (10) comprenant une barre d'équilibrage (2), une tête rotative (14), un gilet de jeu (3) / harnais relié à la barre d'équilibrage (2), une chaussure (6) ayant une pluralité de billes (25) sur son fond (23), un sol (5, 26),
**caractérisé en ce que**
l'appareil de montage (1) comprend en outre :
• Une pluralité d'appareils de montage au plafond (9) qui permet de monter le corps extérieur (10) au plafond ou sur un mur, et un pluralité d'appareils de montage mural (7),
• un anneau d'acier limitant le mouvement (11) placé entre le corps extérieur (10) et le point de connexion, un système d'amortisseur connecté à huit points différents (13) et un potentiomètre analogique et un système de mouvement (16) couplé à la barre d'équilibrage (2),
• le gilet de jeu (3) / le harnais comprend en outre : un circuit électronique et/ou une fente de capteur (18) comprenant des capteurs et des composants de circuit qui permettent de détecter les directions du corps de l'utilisateur,
• deux ceintures de jambes (19) étant configurées pour fixer les jambes supérieures de l'utilisateur et ayant une forme telle qu'elle peut supporter le poids de l'utilisateur lorsqu'il s'assoit sur le sol (5),
la chaussure (6) comprend en outre :
• un circuit électronique et une fente de capteur (24) comprenant des capteurs et des composants de circuit électronique qui fournissent la détection des mouvements des pieds et de mesurer une charge sur les pieds de l'utilisateur,
• un capteur IMU ou un capteur optique et
• un capteur tactile et un capteur de pression.

2. Plate-forme de mouvement de réalité virtuelle selon la revendication 1, **caractérisée en ce que** le système d'amortissement (13) est un système d'amortissement à ressort.

3. Plate-forme de mouvement de réalité virtuelle selon la revendication 1, **caractérisée en ce que** le système d'amortissement (13) est un système d'amortissement hydraulique.

4. Plate-forme de mouvement de réalité virtuelle selon la revendication 1, **caractérisée en ce que** le système d'amortissement (13) est configuré de telle que sa résistance à la traction puisse être augmentée et diminuée pour permettre d'appliquer une puissance contre les mouvements de l'utilisateur.

5. Plate-forme de mouvement de réalité virtuelle selon la revendication 1, **caractérisée en ce qu'**une partie supérieure de la tête rotative (14) est stable et qu'une partie inférieure de la tête rotative est mobile.

6. Méthode d'opération d'une plate-forme de mouvement de réalité virtuelle selon la revendication 1, **caractérisée en ce que** la méthode comprend les étapes suivantes :
a. détecter les changements de mouvement à différents moments par le capteur IMU ou les capteurs optiques sur les chaussures (6 et 27),
b. nettoyer les points mesurés au moyen de filtres de suppression du bruit et comparer les changements de mouvement avec les mouvements détectés par d'autres capteurs en différents points des pieds, et transférer les changements instantanés en tant que mouvements dans l'environnement de réalité virtuelle.

7. Méthode d'opération selon la revendication 6, **caractérisée en ce que** la méthode comprend des étapes supplémentaires consistant à prédire la position d'un pied en fonction des changements de charge à différents moments qui sont détectés par les capteurs de toucher et de pression sur les chaussures (6 et 27), à nettoyer la position au moyen des filtres de suppression du bruit, à comparer ladite position avec les autres capteurs de toucher et de pression sur l'autre pied et à transférer les changements instantanés en tant que mouvements dans l'environnement de réalité virtuelle.

8. Méthode d'opération selon la revendication 7, **caractérisée en ce que** la méthode comprend des étapes supplémentaires consistant à transférer séparément les directions dans lesquelles le corps, les jambes et les pieds de l'utilisateur sont orientés au moyen de capteurs IMU sur le gilet de jeu (3) et les chaussures (6), en fonction des capacités de la plate-forme et du logiciel auquel les composants sont connectés.
